(19)

Europäisches
Patentamt
European
Patent Office
Office européen
des brevets

(11)  **EP 4 386 629 A1**

(12)  **EUROPEAN PATENT APPLICATION**

(43) Date of publication:
**19.06.2024 Bulletin 2024/25**

(21) Application number: **22213914.9**

(22) Date of filing: **15.12.2022**

(51) International Patent Classification (IPC):
**G06N 3/049** (2023.01)   **G06N 3/063** (2023.01)
**G06N 3/0495** (2023.01)   **G06N 3/084** (2023.01)
**G06N 3/044** (2023.01)

(52) Cooperative Patent Classification (CPC):
**G06N 3/049; G06N 3/044; G06N 3/0495;
G06N 3/063; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Imec VZW
3001 Leuven (BE)**

(72) Inventor: **KEUNINCKX, Lars
2860 Sint-Katelijne-Waver (BE)**

(74) Representative: **Winger
Mouterij 16 bus 101
3190 Boortmeerbeek (BE)**

(54)   **MONOSTABLE MULTIVIBRATORS-BASED SPIKING NEURAL NETWORK TRAINING METHOD**

(57)   A method for training a spiking neural network (200) using monostable multivibrators (10) as artificial neurons and a related hardware configuration method are disclosed. Each monostable multivibrator comprises two inputs respectively connected to an excitatory (EXC) and an inhibitory (INH) input wire. The multivibrators are set to a triggered state if an amount of excitatory input exceeds a first threshold and are set to an idle state if an amount of inhibitory input exceeds a second threshold. Output spikes are generated when a time period (T) as- sociated with the multivibrators has elapsed, returning the same from the triggered back to the idle state. A back-propagation training algorithm is executed to train the network. During the forward passes (304), intra-network connections are modulated (304-1) over a number of training epochs so as to gradually transform them into discrete variables. During backward passes (305), van- ishing or exploding gradients related to discontinuous spike generation events, trigger events and reset events are replaced (305-1) by respective surrogate gradients.

FIG. 2

EP 4 386 629 A1

## Description

**Field of the invention**

The present invention generally relates to the field of spiking neural networks, and particularly relates to training methods for spiking neural networks that use monostable multivibrators as neurons.

**Background of the invention**

Spiking neural networks (SNNs) are specialized artificial neural networks (ANNs) that try to mimic the spiking behavior of current pulses in the brain. Owing to discrete and binary nature of spikes as information carriers, SNNs are believed to be the next-generation ANNs that have the potential of outperforming state-of-the-art static deep neural networks in terms of energy cost per inference. Moreover, the capability of processing time-encoded spike events further improves network latency.

However, the development and large-scale adaption of SNNs is hampered by the lack of efficient training methods. Training SNNs with backpropagation algorithms proves to be difficult in practice due to the non-differential character of the spike events. This is particularly true for the widely used spiking networks of integrate-and-fire neurons. Converting fully-trained and well-behaved static ANNs into dynamic SNNs has been proposed as one way of coping with the training difficulties. Another approach relies on the use of probabilistic spiking neurons, but the exhaustive sampling that is required in probabilistic networks can be prohibitive for real-world applications.

A further difficulty resides in the fact that electronic hardware which is designed to support the operation and training of SNNs often has recourse to complex, specifically developed neuron circuits that feature equivalents of membrane potential and synaptic summing.

L. Keuninckx, et al. "Monostable multivibrators as novel artificial neurons", Neural Networks, vol. 108, pp. 224-239, 2018. developed a hardware implementation of a SNN which uses monostable multivibrators as the fundamental building blocks that exhibit neuron functionality. It has been demonstrated that this type of SNN has rich and interesting internal dynamics. Even though its use for information processing had been suggested by the authors, no practical training method has been elaborated ever since.

Therefore, there is a long-felt need to provide effective training methods for spiking neural networks that use simple electronic circuits as artificial neurons.

**Summary of the invention**

It is an object of embodiments of the present invention to provide effective training methods for spiking neural networks that use simple electronic circuits as artificial neurons.

The above objective is accomplished by a method according to the present invention.

In one aspect the present invention relates to a training method for spiking neural network which use monostable multivibrators as artificial neurons. Each monostable multivibrator comprises an excitatory and an inhibitory input respectively connected to an excitatory input wire and an inhibitory input wire, which together form an input wire pair. Monostable multivibrators of the spiking neural network may be retriggerable and/or non-retriggerable. The method comprises running an error backpropagation training algorithm to train the spiking neural network on a training dataset. The error backpropagation training algorithm comprising a forward pass and a backward pass. During the forward pass an amount of excitatory and inhibitory input applied to each monostable multivibrator are determined, by combining input spikes on the respective excitatory input wire and combining input spikes on the respective inhibitory input wire. The monostable multivibrators are set to a triggered state if the corresponding amount of excitatory input exceeds a predetermined first threshold value, and the monostable multivibrators are set to an idle state if the corresponding amount of inhibitory input exceeds a pre-determined second threshold value. A state variable associated with each monostable multivibrator is incremented step-wise during the forward pass if the monostable multivibrator is in the triggered state. An output spike is generated in respect of monostable multivibrators that automatically return from the triggered state back to the idle state as soon as the corresponding state variable exceeds an adjustable time period. While running the forward pass, scaled versions of the output spikes are applied to the excitatory and inhibitory input wires of the spiking neural network in accordance with a network connectivity matrix. Each entry in the network connectivity matrix has a sign and a magnitude; the sign distinguishes between monostable multivibrator output connections to excitatory input wires or inhibitory input wires and the magnitude determines the amount by which the output spikes are scaled. Moreover, the entries in the network connectivity matrix are modulated over a number of training epochs during the forward passes so as to gradually transform the entries into discrete variables. Running the backward pass comprises the step of replacing vanishing or exploding gradients related to discontinuous output spike generation events, discontinuous trigger events and discontinuous reset events in step by respective surrogate gradients or smoothened steady-state event rates.

It is an advantage of embodiments of the invention that energy-efficient and area-efficient hardware implementation of spiking networks of monostable multivibrators can be trained efficiently. Training methods according to embodiments of the invention are easily scalable to large network sizes and are capable of dealing with recurrent network connections.

It is an advantage of embodiments of the invention that hardware/software implementation of spiking networks of monostable multivibrators can be trained, which are free of synaptic additions. This further reduces the network's latency and energy cost.

According to some embodiments of the invention, the monostable multivibrators are implemented as digital logic gates and running the forward pass comprises executing a simulation model of the digital logic gates.

It is an advantage of embodiments of the invention that implementation of spiking networks of monostable multivibrators can be trained, which offer very low power processing and are implementable with today's standard digital technology. No multipliers and/or adders are required in these spiking neural networks.

It is an advantage of embodiments of the invention that monostable multivibrators can be described and simulated as simple counters in a hardware description language.

According to preferred embodiments of the invention, the spiking neural network is an event-driven recurrent spiking neural network and training samples of the training dataset are represented by event-encoded spike trains.

It is an advantage of embodiments of the invention that implementation that spiking neural networks can be trained to cooperate and perform well with event-driven sensors such as event cameras. Hardware implementations of spiking networks of monostable multivibrators can be configured or designed according to training results obtained through embodiments of the invention. These hardware implementations can be integrated with event-driven sensors to provide processing of sensor events.

In reservoir computing approaches, a linear readout layer acts on a randomly initialized recurrent neural network - the reservoir. As the reservoir remains untrained, its size has to be relatively large to perform useful computations. Compared to reservoir computing, embodiments of the invention offer the advantage that intra-network connections are trainable, thus yielding smaller or more compact networks of monostable multivibrators.

Any direct translation of known ANNs that use continuous dynamical variables to programmable gate arrays (FPGAs) as digital platform technology causes significant overhead, reducing the number of available elements in the network.

According to some embodiments of the invention, executing the forward passes includes the step of gradually transforming the entries into ternary digits, thus obtaining fully binarized excitatory connections and fully binarized inhibitory connections between monostable multivibrators in the spiking neural network. Additionally, the time periods of the monostable multivibrators may be modulated over a number of training epochs so as to gradually transform the time periods into a number of integer-valued time periods.

It is advantageous that embodiments of the invention can generate trained spiking neural networks that are inherently discrete (e.g. discrete input and output variables, discrete network connections, discrete monostable multivibrator time periods), hence easily translated to digital platforms.

In accordance with some embodiments of the invention, step-wise incrementing a state variable associated with each monostable multivibrator includes multiplication with a growth factor. This has the additional benefit that training biases towards smaller time periods of the monostable multivibrators in the spiking neural network can be avoided.

In another aspect the present invention relates to computer program product comprising instructions which, when executed by a computer, cause the computer to carry out the method steps of embodiments of the first aspect.

In yet another aspect the present invention relates to a computer-readable data carrier that has stored thereon the computer program product of the previous aspect.

The present invention also relates to a configuration method for a hardware system comprising a spiking neural network formed by a plurality of digitally implemented monostable multivibrators, which carries out the training method in accordance with embodiments of the first aspect and programs the time periods associated with the monostable multivibrators and the intra-network connections according to the learnt network parameters.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, in which:

FIG. 1 explains how a monostable multivibrator as artificial neuron reacts to different trigger input scenarios in training methods according to embodiments of the invention.
FIG. 2 is a circuit diagram of a recurrent spiking neural network formed by a plurality of monostable multivibrators, which can be trained by methods according to embodiments of the invention.
FIG. 3 is a flowchart illustrating a method of training a spiking neural network with monostable multivibrator based neurons in accordance with embodiments of the invention.
FIG. 4 and FIG. 5 illustrate how transformed network parameters are functionally related to original network parameters in the backward pass when network parameters are subjected to gradual discretization over a number of training epochs, in accordance with embodiments of the invention.
FIG. 6 explains the surrogate gradient concept for non-differentiable neuron activation functions as used in embodiments of the invention.
FIG. 7 shows a spike pattern generated by a spiking neural network trained in accordance with embodiments of the invention.
FIG. 8 illustrates the architecture and data input scheme for a spiking neural network trained on a handwritten digit classification task, in accordance with an embodiment of the invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

**Detailed description of illustrative embodiments**

The present invention will be described with respect to particular embodiments and with reference to certain drawings but the invention is not limited thereto but only by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

DEFINITIONS

In the context of the present invention, event-encoded or event-coded data inputs refer to transformations of continuous data input signals into a series of spike events. Rate encoding, rank encoding and delta-encoding are examples of event-encoding.

The conception of spiking neural networks based on monostable multivibrator artificial neurons has been described in L. Keuninckx, et al. *"Monostable multivibrators as novel artificial neurons"*. Although monostable multivibrators neurons are non-biologically inspired, they have the advantage of architectural simplicity and are ubiquitous, low-cost building blocks in electronic devices. This makes them promising candidates for energy-efficient, hardware-implemented spiking neural networks, even for increased network sizes.

Monostable multivibrators (MMVs) considered in embodiments of the invention are analog or digital electronic components that can be triggered from a stable state into an unstable state. The stable and unstable state are also referred to as idle state and triggered state respectively. After a pre-determined time period in the unstable state - which may be adjustable-the MMV generates an output pulse and transitions back into its stable. Each MMV is adapted for receiving trigger pulses of the excitatory and the inhibitory type; the aforementioned transition from the stable state into the unstable state is solely caused by the excitatory trigger input. In contrast thereto, the inhibitory trigger input causes the MMV to prematurely abandon the unstable state and fall back to the stable state before the pre-determined time period has elapsed. An output pulse is not generated in this case. The inhibitory trigger input has no effect on the MMV in its stable state. A further distinction is made between a retriggerable and a non-retriggerable MMV. The former restarts the time period in the unstable state when a further excitatory trigger pulse is received, whereas the latter continues running the time period in the unstable state when a further excitatory trigger pulse is received. For a non-retriggerable MMV in the unstable state, any subsequent excitatory trigger input is thus ignored. In general, it is assumed that trigger pulses supplied to input connectors of the MMV, and output pulses generated by the MMV, are significantly shorter than the inherent time period of the MMV. This reasonable assumption is verified in most, if not all, practically relevant applications.

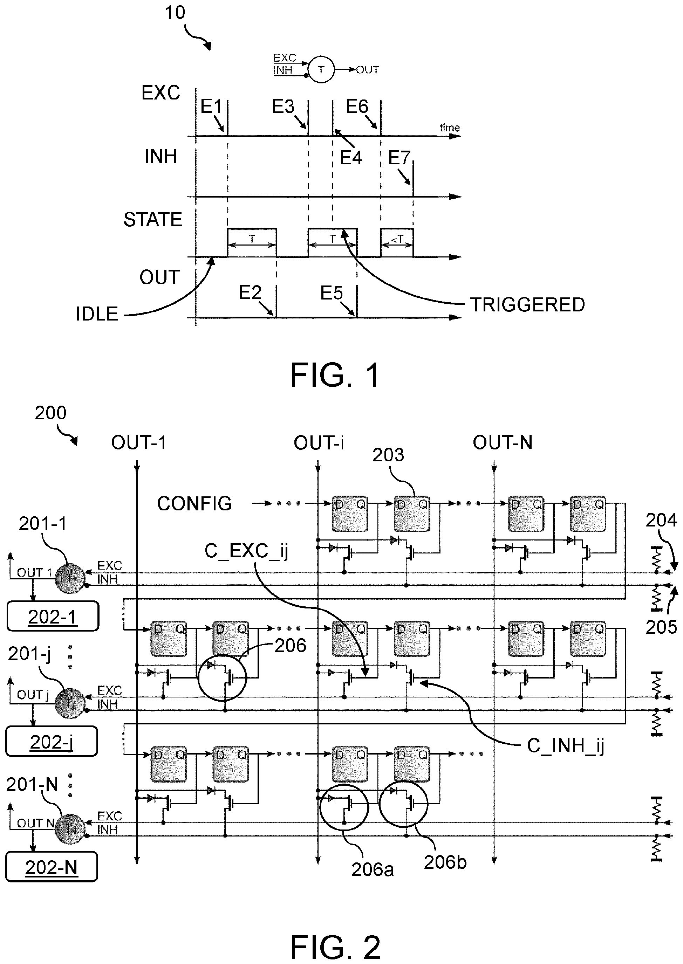

FIG. 1 explain how a single non-retriggerable MMV 10 reacts to different input scenarios, depicted as a sequence of events 'E1' to 'E7'. The evolution of the MMV's inherent state and the creation of an output spike depend on the excitatory or inhibitory nature of the trigger pulse as well as the particular state - stable or unstable - the MMV is currently in. Excitatory inputs (excitatory trigger pulses) and inhibitory inputs (inhibitory trigger pulses) are respectively applied to an excitatory input connector 'EXC' and an inhibitory input connector 'INH' of the MMV 10. Generated output pulses are supplied through an output connector 'OUT' of the MMV 10. Event 'E1' consists of the application of an excitatory input pulse and raises the MMV from the idle state to the triggered state. After a pre-determined time period T, the MMV transitions back into the idle state and an output pulse is emitted. This constitutes event 'E2' in the figure. Event 'E3' is similar to and has the same effect as previous event 'E1'. The reception of a further excitatory input pulse while the MMV is dwelling in its triggered state constitutes event 'E4', which has no impact on the MMV. The further excitatory input pulse is ignored in this situation. An output pulse is still produced by the MMV after the time period T, marking the fifth event 'E5' in this figure. The sixth event 'E6' is again the repetition of the first event 'E1' at a later point in time. The following situation occurs during the seventh event 'E7': an inhibitory input pulse is applied to the MMV while it is still in the triggered state. Though the time period T has not yet elapsed at the time of event 'E7', the MMV immediately returns to the idle state in response to the inhibitory input pulse. No output pulse is generated in this case.

A similar analysis of input scenarios can be performed for a retriggerable MMV, in which case event 'E4' would have an impact on the MMV, viz. restarting the running down of the time period T. As a result thereof, the MMV would stay for a prolonged time interval in the triggered state, i.e., a time interval longer than the intrinsic time period T of the MMV, and only thereafter transition back to the idle state.

A plurality of the aforesaid MMVs can be wired together to form a network in which output pulses (spikes) generated by one or more MMV propagate to connected MMVs (topological neighbors), possibly flipping the intrinsic states of some, if not all, of the connected MMVs. This in turn entails the creation of further output spikes. For information processing purposes, external input spikes are applied to the MMVs in the network, e.g. via a separate input layer, rather than seeding the network activity with some random spikes. Although the latter option is still valid if an output of the network is trained to reproduce a stable pattern, e.g. a neural oscillator-based (central) pattern generator that can be used for motion control in robots. In addition thereto, a separate output layer with trainable output connections is usually provided in order to extract a useful output signal or set of output signals from the network of MMVs.

Training methods in accordance with embodiments of the invention can be used to train recurrent spiking neural networks as well as non-recurrent spiking neural networks such as spiking neural networks having a feedforward architecture, e.g. deep spiking neural networks. Recurrent spiking neural networks can be unfolded in time, which yields an equivalence relation between the recurrent spiking neural network and its unfolded feedforward structure. This allows backpropagation through time (BPTT) algorithms to be used in training methods in accordance with embodiments of the invention.

Training methods in accordance with embodiments of the invention rely on a model representation of the physical network in software, meaning that hardware implementations of spiking neural networks comprising MMVs as artificial neuron units are predominantly pre-trained, not in situ, but in silico. The specific hardware implementation of individual MMVs as such is not decisive for the simulation of the network behavior that is needed for training, but can be taken into account. Indeed, a formal higher-level description of the MMV's reaction to trigger input pulses and their internal dynamics still, e.g. a register-transfer-level abstraction in hardware description languages, provides sufficiently accurate information for the purpose of training the network of MMVs. Nonetheless, embodiments of the invention may include the emulation of the MMVs in the network at a device-level or gate-level as an additional step, e.g. by a circuit simulator, whilst carrying out the training method. Moreover, it is noted that the modelled MMVs do not all have to be identical in embodiments of the invention; it is possible to train hybrid networks in which different types of MMVs are connected to each other, e.g. containing both retriggerable and non-retriggerable MMVs. Model representations of MMVs include analog circuits with MMV functionality, e.g. switching circuits with an RC-timing network such as cross-coupled bipolar junction transistors (BJTs) with an RC-member coupled to a base lead of one of the two cross-coupled BJTs or closed-loop Schmitt trigger circuits using an operational amplifier, as well as digital circuits, digital integrated circuits or digital devices with MMV functionality, e.g. cross-coupled NOR-gates, programmable digital timers such as the popular "555 timer IC".

Training methods in accordance with embodiments of the invention learn or optimize a set of network parameters that characterize the modelled spiking neural network of MMVs, e.g. including intra-network connections, connection between the network and an input/output layer, the time periods associated with the MMVs, etc. This set of learnt network parameters can then be transferred to the physical network, e.g. by configuring the hardware implementation of the spiking neural network of MMVs according to the set of learnt network parameters. Embodiments of the invention are not limited to purely software-implemented training methods, but may include the step of fine-tuning hardware implemented spiking neural network of MMVs in situ, the initial configuration of which is based on the set of learnt network parameters.

Training methods according to embodiments of the invention are methods by which the type of connection - either excitatory, inhibitory, or none/missing connection - between any two neurons of the network are learnt. These connections, if formed, have unit strength, e.g. a transmission coefficient/weight factor/synapse magnitude value for output pulses travelling across this connection is 'one'. The non-formation or absence of connections between any two neurons of the network are equivalent to connections that have zero-strength. Therefore, definite connections in the neural network, i.e. as obtained through training methods according to embodiments of the invention, can be represented as entries into a network connectivity matrix C (weight matrix), wherein each entry takes on one of the three permitted values: {-1; 0; +1}. Here, non-connections - that is, connections that are absent - are represented by '0'-entries, excitatory connections are represented as '+1'-entries and inhibitory connections in the network are represented as '-1'-entries of the connectivity matrix. The binary nature of connections between constituting neurons of the spiking neural network, i.e. presence or absence of a connection, facilitates a hardware implementation of the trained spiking neural network, e.g. a digital hardware implementation of reconfigurable spiking neural networks based on MMVs.

The foregoing concept similarly applied to the connection between the MMVs of the network and the units of an input layer and/or the unit of a readout layer. These connections can be parametrized as entries of an input weight matrix or input connectivity matrix and assume one of the three permitted values: {-1; 0; +1}. According some embodiments of the invention, however, the connections of the readout layer are not restricted to have unit strength, but are allowed to take any value or a larger number of permitted values when the precision for the connection strength is increased. This is the case, for example, in linear readout layers which operate on the integer-valued spike counts observed at the output connectors of the respective MMVs in the network.

Training methods according to embodiments of the invention are also methods by which the time periods/constants associated with the MMVs of the spiking neural network are learnt. For MMV-based spiking neural networks deployed in software, or in analog hardware implementations, the time periods may take any value in a continuous range of permitted time periods. Alternatively, and in particular for digital hardware implementations, the learnt time periods are discrete variables, e.g. are restricted to a discrete finite set of time periods as a result of training, e.g. a bounded set of integer-valued time periods.

FIG. 2 is a circuit diagram of a recurrent network 200 formed by a plurality of N interconnected MMVs 201-1, ..., 201-j, ..., 201-N. Each MMV comprises one output connector 'OUT' and two separate input connectors, 'EXC' and 'INH', respectively connected to a corresponding excitatory input wire and a corresponding inhibitory input wire. Excitatory trigger pulses are received by the excitatory input connector, 'EXC', via the corresponding excitatory input wire and inhibitory trigger pulses are received by the inhibitory input connector, 'INH', via the corresponding inhibitory input wire. Outputs 'OUT-1',..., 'OUT-j', ..., 'OUT-N' of the respective MMVs 201-1, ..., 201-j, ..., 201-N are fed back to the excitatory and inhibitory input wires of the network via reconfigurable intra-network connection units 206 (e.g. synapses). In the present embodiment, the synapse or intra-network connection units 206 behave as unidirectional switches and are arranged at the crossing points of vertically oriented output signal wires and horizontally oriented input wire pairs, wherein each input wire pair has an excitatory and an inhibitory input wire. An exemplary connection units 206 may contain a diode and a transistor, which are connected in series. The plurality of output wires, the plurality of input wire pairs and the plurality of connection units thus form a crossbar switching matrix of the network 200, which allows any MMV output spike to be fed back to an input connector- either excitatory or inhibitory - of any MMV in the network. This includes the possibility of self-feedback. The connection between any two MMVs of the network 200 is either of the excitatory type 206a or of the inhibitory type 207b. A configuration bit stream 'CONFIG' is usually supplied to a plurality of daisy-chained storage elements 203, which together form the configuration memory of the network 200. A simple daisy-chain of D-flipflops may be used to implement the configuration memory. In the network 200, each storage element 203 is associated with one of the intra-network connection units 206 and controls a configuration state thereof, e.g. connected or disconnected. In the present embodiment, the binary-valued output signals of the storage elements, e.g. 'C_EXC_ij' and 'C_INH_ij' in respect of the switching elements at the crosspoint between the i-th output wire and the input wire pair associated with the j-th MMV, represent the +1/-1 entries of the network's connectivity matrix C and are applied to the transistor gate terminal of the corresponding intra-network connection units 206a, 206b. External inputs 204, 205 can be applied to each input wire pair in the following way: excitatory/inhibitory input spikes are delivered as voltage pulses across a pull-down resistor which is connected to the other end of the excitatory/inhibitory input wire, e.g. opposite to the 'EXC'/'INH' input connector.

Coincidence of multiple excitatory input trigger pulses stemming from operatively connected excitatory external inputs 204 and/or excitatory feedback paths - output pulses travelling along vertical output wires 'OUT-1',..., 'OUT-j', ..., 'OUT-N' and across intra-network connection units of the excitatory type 206a - is allowed and does not require synaptic pulse summing, i.e. the presence of an addition circuit. Indeed, multiple excitatory input trigger pulses are subjected to a multi-input "OR" operation, e.g. are "OR"-ed together. Each excitatory input wire terminated by a pull-down resistor acts as a shared signal line for the transistor devices of the intra-network connection units of the excitatory type 206a, which are functioning as OR-gates with regard to feedback signal pulses. The same is true for coincidences between inhibitory input pulses stemming from operatively connected inhibitory external inputs 205 and/or inhibitory feedback paths - output pulses travelling along vertical output wires 'OUT-1',..., 'OUT-j', ..., 'OUT-N' and across intra-network connection units of the inhibitory type 206b. When the network 200 is running, the MMVs generate timed output pulses in response to the OR-ed excitatory input pulses and the OR-ed inhibitory input pulses, thereby mimicking the spiking behavior of biological neurons in the brain.

Optionally, spike counters 202-1, ...., 202-j, ..., 202-N are provided to count the output spikes generated by the respective ones of the plurality of MMVs 201-1, ...., 201-j, ..., 201-N over a pre-determined output integration time interval. If present, the spike counts of each spike counter can be used to derive rate-based outputs, or combinations thereof (e.g. weighted sum). Alternatively, the integration time interval may be set to last for the time of execution of the network operation (e.g. simulation in hardware or real-world run in hardware), in which case totally accumulated counts for the output spikes generated by each MMV of the network are obtained. In yet another variant, population counts are generated by dividing the plurality of network MMVs into multiple disjoint subsets (neuron populations) and adding up the total spike counts of the MMV-based neurons in each one of the subsets, e.g., by assigning unit strength to the connections of the readout layer that are associated with the different neuron populations. Total spike counts, rate-based outputs (average spiking rates) or population counts may be used as inputs to a subsequent readout layer, e.g. linear readout layer.

In the network, the MMVs act as artificial neurons, the excitatory and inhibitory input wires and the output wires act like dendrites, the excitatory and inhibitory input connectors act like axons and the crosspoint switches act like synapses. The MMV array may be part of a system-on-chip design, where it acts as an integrated MMV acceleration hardware block.

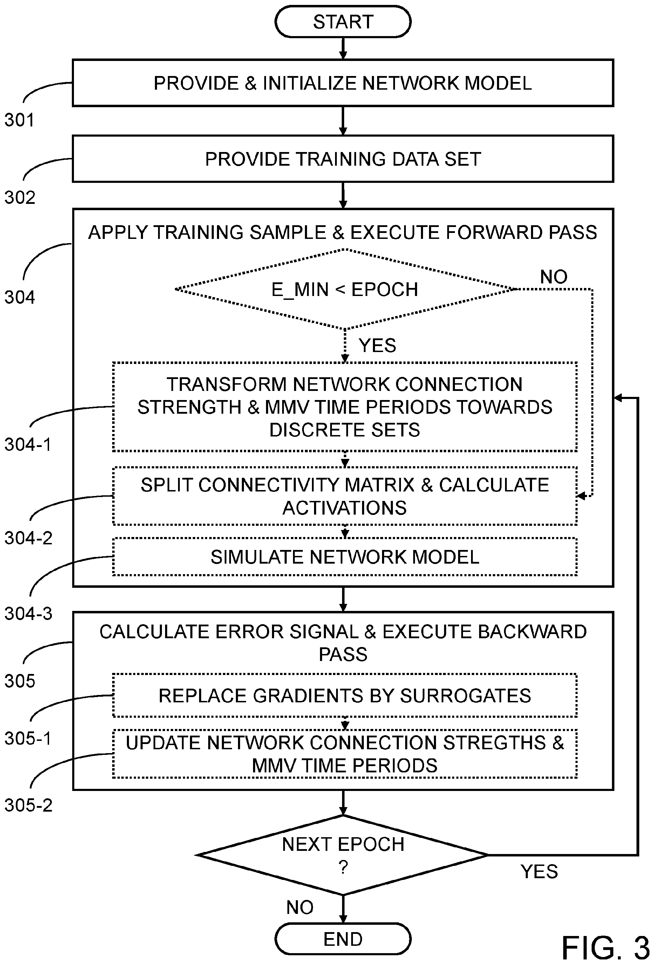

A method of training a spiking neural network with monostable multivibrator based neurons is now described with reference to FIG. 3. A formal model of the input/output behavior and internal state dynamics of the MMVs in the network is first provided in step 301. This formal model specifies the available inputs and outputs of the MMV and further defines the conditions under which an output spike is created and the internal state switches from idle to triggered and vice versa. Commercially available hardware description languages may be used to this effect. An exemplary excerpt of pseudo-code which provides an update function of the MMV internal dynamics in an abstract high-level model description is listed below:

```
Function: UPDATE_MMV_STATE (in_exc, in_inh)
parameter: T;
hyperparameters: a = 1.1, b = 0.99;
a0 = pow (a,-T+0.5);
    state = a*state;                              % line 1
```

(continued)

| | |
|---|---|
| spike = FW_ACT(state-1); | % line 2 |
| if spike==1 then state = 0, else state; | % line 3 |
| exc = FW_ACT(in_exc - b); | % line 4 |
| inh = FW_ACT(in_inh - b); | % line 5 |
| if state ==0 then state = exc *a0, else state; | % line 6 |
| if inh == 1 then state = 0, else state; | % line 7 |
| **return** spike | % line 8 |

The pseudo-code defines an amount of excitatory input 'in_exc' and an amount of inhibitory input 'in_inh' as two independent input variables of the update function, which has a time period 'T' as internal parameter. A multiplicative increment 'a' and a threshold parameter 'b' are hyperparameters of the training method. In the following, the different lines of the update function are briefly explained. Each function call of the update function for the MMV may correspond to one simulation time step of the network.

- Line 1: At each function call, an internal variable called 'state' is incremented by multiplication with hyperparameter 'a'. This variable acts as a (non-integer) counter or time growth variable that keeps track of the number of times the MMV has been updated since it has last been switched to the triggered state.
- Line 2: The firing condition for an output spike is fulfilled if the time growth variable 'state' has surpassed the unit threshold, assuming that the applicable threshold function in forward passes of the training method, 'FW_ACT', is the Heaviside step function. It will be demonstrated further below that this happens precisely 'T' function calls/updates after an excitatory input event 'exc' has occurred which placed the MMV into the triggered state. The spiking condition at the output is assigned to the Boolean variable 'spike'.
- Line 3: Upon generation of an output spike, the time growth variable 'state' is reset to zero as the M MV will discontinue the triggered state and switch back to the idle state. This also prevents the generation of further output spikes immediately after an initial output spike event, whereby the refractory period of a biological neuron is mimicked.
- Line 4: The condition for switching the MMV to the triggered state is fulfilled if the amount of excitatory input 'in_exc' has surpassed the threshold for triggering 'b', assuming that the applicable threshold function in forward passes of the training method, 'FW_ACT', is the Heaviside step function. The occurrence or absence of this switching event is assigned to an excitatory event variable 'exc'.
- Line 5: The condition for switching the MMV to the idle state is fulfilled if the amount of inhibitory input 'in_inh' has surpassed the threshold for triggering 'b', assuming that the applicable threshold function in forward passes of the training method, 'FW_ACT', is the Heaviside step function. The occurrence or absence of this switching event is assigned to an inhibitory event variable 'inh'.
- Line 6: Only if the MMV is in the idle state, does an excitatory event cause the growth variable 'state' to change from a zero value to a small initial value 'a0', so that after 'T' updates an output spike is generated (provided, of course, no inhibitory event occurs during that time period).
- Line 7: In the case of an inhibitory input event, the intrinsic state associated with the MMV is forced to the idle state. An inhibitory event is thus a reset event and an amount of inhibitory input above the pre-determined threshold constitutes a reset pulse.
- Line 8: The spiking condition at the output is returned as an outcome of the update function. It can be read and used by other functions of the MMV model, for instance I/O functions that simulate the behavior of an output signal level at the output connector of the MMV.

The lines of the pseudo-code excerpt are carried out sequentially, hence can be considered steps of a flowchart that controls the internal dynamics and output actions of the individual MMVs. The sequential order also resolves exceptional cases such as the rare concurrency of an excitatory event and an inhibitory event during the same update, and the rare concurrency of an output spike generation and an excitatory/inhibitory event during the same update. In the present embodiment, the output spike is generated first, independently of any simultaneously detected excitatory/inhibitory event. Moreover, the detection of an inhibitory event takes precedence over the detection of a simultaneous excitatory event. However, a different ordering of the update steps may be prescribed in other embodiments of the invention, whereby exceptional cases can be dealt with differently. Besides, different threshold values may be selected in the arguments of the threshold function 'FW_ACT'. For instance, input trigger thresholds for the 'exc' and 'inh' event variables may be different hyperparameters. They may have a positive impact on the learning curve and convergence properties of the training method, though they usually do not affect the learnt set of network parameters at the end of the training method. The network model, and the MMV model in particular, may be specified by user input. Alternatively, step 301 may include loading a publicly available or previously created model from a storage device, e.g. loading a library models stored on an external storage device such as a hard drive or loading a library models that is stored on a server. The network model is generally translated into executable code that is run by a simulation engine, for example a general purpose computing device (e.g. PC), a distributed computer network, a special-purpose computing hardware such as GPUs, or special-purpose simulation hardware such as ASICs or FPGAs.

Step 301 further comprises a network initialization step during which the initial values of the training parameters and training hyperparameters are set. Training parameters include the entries of the network connectivity matrix C, the entries of the input weight matrix (i.e. connections from the input layer units to the network units/MMVs), the entries of the readout layer (i.e. connections from the network units or spike counters to the output layer units), the initial MMV states (preferably all set to idle state), the MMV time periods, and optionally any input bias to the units of the input layer and/or output layer. Initial values for these training parameters may be sampled from a probability distribution, e.g. from normal distribution. Hyperparameters may include the number of units in the input layer and output layer, the number of MMVs in the network, the learning rate, the number of training epochs, the number of permitted values for discretization of the MMV time periods, the number of permitted values for discretization of the entries to the network connectivity matrix and the input weight matrix, the threshold parameters for the detection of excitatory and inhibitory events in the MMVs, the multiplicative increment 'a' used to increase the time counting variable 'state' at each update call of the simulated MMVs, etc. Hyperparameters may partly be generated automatically by the simulation hardware or software, e.g. PyTorch, partly specified by the user. Some of the hyperparameters may be dictated by the network of MMVs that is simulated, e.g. electronic components dependent range of permitted time periods for the MMVs, or by the purpose of the training method, e.g. for hardware implementations with excitatory and inhibitory connections of the binary type (open or closed).

Next, a training dataset is provided in step 302. Embodiments of the invention combine supervised learning strategies with the backpropagation through time algorithm for the calculation of training parameter updates (e.g. connection strengths, time periods). Therefore, suitable training datasets comprise training samples in which training targets are paired with training data. The training data may be image data or serialized image data, e.g. represent samples of handwritten digits, gestures, sample points from a segmentation task, encodings of time series such as sound, speech or word sequences, or others.

Preferably, the training data uses event-coded data inputs; the discrete nature of spike occurrences in spiking neural networks is inherently event-based and therefore well-suited for information processing tasks that use event-driven inputs. For instance, spiking neural networks trained in accordance with embodiments of the invention are ideal for the classification or recognition of output signals generated by event-based sensors, e.g. event-based vision sensors like event cameras/silicon retina. Rate-based encodings of training data inputs is one way of approximately representing analog data inputs through a sequence/stream of binary input spikes, e.g. as an input spike train, but is not the most preferred one due to the relatively long time intervals required for obtaining acceptable averaging of spike rates. Instead, a time-based encoding scheme in which the temporal location of each input spike represents the analog or multi-valued input signal is preferred, which allows for shorter input spike trains that are faster to process at reduced energy consumption.

The training parameters of the spiking neural network are then trained by iteration over a number of pre-determined training epochs, e.g. 10-1000 training epochs, e.g. 30-300 training epochs. Larger-sized spiking neural networks tend to require longer training epochs due to the larger number of training parameters (e.g. intra-network connections). Each training epoch contains a forward pass 304 and a backward pass 305. After each backward pass it is decided whether a new training epoch should be started. If the decision takes is positive, the training continues with another forward pass 304, increasing the epoch counter by one epoch. The training of the spiking neural network stops as soon as the pre-determined number of training epochs has been reached, or a performance-based evaluation metric has crossed a target performance value. For instance, the training rate has reached a target training rate, e.g. training loss as defined by a suitable loss function for the spiking neural network, the test training rate has reached a target test rate (e.g. test loss with respect to the defined loss function), the training rate does not improve significantly over several successive training epochs, e.g. a change in the training rate is less than a pre-defined minimum change (hyperparameter) during a number of successive training epochs, etc. In embodiments of the invention, available powerful and comprehensive software tools and libraries for machine learning, such as PyTorch, TensorFlow or Keras, can be used to program and perform the repeated forward and backward passes in a user-friendly, semiautomatic fashion. Especially auto-differentiation tools and automatic gradient calculation via function dependency graphs is a much appreciated feature which facilitates the error backpropagation computation and bookkeeping of gradients relative to the training parameter.

Each forward pass 304 comprises applying the training data input(s) of one or more training samples of the training dataset, e.g. a fraction of all training samples or all training samples, to the input layer. Multiple training samples may be treated in parallel, using duplicates of the network, or sequentially using a single instance of the network to be trained. In embodiments of the invention in which a trainable input layer is absent, e.g. in implementations with hard-wired input connections, the training data inputs (e.g. input spikes representing the data inputs) may be applied directly to the input wire pairs of the network.

During each forward pass 304, the response of the MMV network to the applied input spike trains is simulated in step 304-3. This simulation includes repeatedly updating the MMVs, e.g. via the above-described update function calls, and propagating the generated output spikes across the current configuration of intra-network connections between any two successive updates, at least as long as input spikes are supplied to the network. The updating of the MMVs is executed for each simulation time step of a plurality of simulation time steps that together span the simulated time horizon over which the network's spiking behavior is observed and read out. The network's response to the external input stimuli can ne simulated over an extended time horizon to also capture transient spiking behavior of the network right after application of the input spike trains.

The network simulation step 304-3 requires knowledge about the neuron activations, which are calculated in step 304-2. Here, neuron activations refers to the amount of excitatory input and the amount of inhibitory input that is present on the input wire pair of each MMV of the network, i.e. the excitatory trigger signal level at the excitatory input connector 'EXC' and the inhibitory trigger signal level at the inhibitory input connector 'INH'. Machine learning software best assists the user if the neuron activations are determined automatically by the software, without the intervention of the user, based on the set of output spikes generated during the preceding simulation time step that are fed back to the MMVs (i.e. inhibitory and excitatory external internal inputs), the externally applied inhibitory and excitatory inputs, the network connectivity matrix $C_{net}$' and the input weight matrix $C_{in}$'. To help the software distinguishing between excitatory input and inhibitory input, the connectivity matrix $C_{net}$' and the input weight matrix $C_{in}$' are split during the forward pass as:

$$C_{net/in} \longmapsto \left\{ C_{net/in}^{EXC};\ C_{net/in}^{INH} \right\}$$

$$C_{net/in}^{EXC}(i,j) = C_{net/in}(i,j), \qquad if\ C_{net/in}(i,j) \geq 0$$

$$C_{net/in}^{INH}(i,j) = C_{net/in}(i,j), \qquad if\ C_{net/in}(i,j) < 0$$

It is noted that this splitting operation is continuous and differentiable so that it is tractable by auto-gradient tools. When a positive-valued connection strength is altered during training in such a way that it becomes negative-valued, the nature of the connection changes from excitatory to inhibitory. With the four split matrices $C^{EXC}_{net}$, $C^{EXC}_{in}$, $C^{INH}_{net}$ and $C^{INH}_{in}$ it now becomes possible to determine the amount of excitatory input 'in_exc' and the amount of inhibitory input 'in_inh' as sums of matrix-vector products:

in_exc = $C^{EXC}$net * Sp_int + $C^{EXC}_{in}$ * Sp_inp
in_inh = $C^{INH}_{net}$ * Sp_int + $C^{INH}_{in}$ * Sp_inp,

wherein 'Sp_int' is the internal spike vector and 'Sp_inp' is the input spike vector to the network, i.e. an externally applied training or test data input. Here, the internal spikes refer to the generated output spikes of the previous simulation time step that are fed back to MMVs of the spiking neural network. Both the internal spike vector and the input spike vector have binary-valued vector components, e.g. components indicating the presence or absence of a spike. In general, the amount of excitatory input 'in_exc' and the amount of inhibitory input 'in_inh' are continuous variables at the beginning of the training. As the training of the spiking neural network advances, the split matrices are subjected to a gradual discretization and the resulting amounts of excitatory and inhibitory input will become integer-valued, e.g. approach one of the values 0, 1, 2, .... Details regarding the gradual discretization of the matrices are given below. Hence, determining the amounts of excitatory and inhibitory input essentially reduces to a spike count on the input wire pair of each MMV. Application of the hard threshold operation 'FW_ACT' to the spike counts relative to the excitatory and inhibitory input connector during the forward pass produces the same effect as a multi-input OR-function. The aforementioned example of calculating weighting and summing the internal and input spikes is one way of determining the amounts of excitatory and inhibitory input in respect of each MMV. Internal spikes and the input spikes may be combined in different ways to obtain the amounts of excitatory and inhibitory input in respect of each MMV. Internal spikes and input spikes may be averaged for example, or a median value of the internal spikes and input spikes weighted by their respective split matrices is calculated.

As a further sub-step during the froward pass 304, the network connection strengths $C_{net/in}$' and MMV time periods $T_{1,\dots,N}$ are subjected to a transformation step 304-1. This transformation step has the goal of gradually discretize the network connection strengths and MMV time periods towards and is only executed after some initial pre-training, i.e. only if the number of training epochs (variable 'EPOCH' in FIG. 3) has exceeded a lower bound ('E_MIN'). Likewise, the transformation step 304-1 may be omitted as soon as the current number of training epochs has crossed an upper bound ('E_MAX', not shown in FIG. 3), hence the transformation step is only applied if the current training epoch is comprised in the range from 'E_MIN' to 'E_MAX' (both hyperparameters). A gradual discretization of the network connection strengths and MMV time periods progressively turns them discrete variables, e.g. by forcing them to approach one of the permitted values of the discrete variable over a number of training epochs. In preferred embodiments of the invention, the network connection strengths, e.g. the matrix elements of 'C$_{net/in}$', are gradually transformed into ternary digits with permitted values in the set {-1; 0; +1}. This reflects the open character of unformed connection (i.e. absent - having value '0') and the inhibitory or excitatory nature of formed connections (i.e. having '-1' or '+1' as value). Therefore, the preferred embodiments of the invention have the advantage that formed connections between input units and network units (MMVs) and between any two network units are fully binarized. Likewise, the MMV time periods can be gradually transformed into a set of integer-valued time periods, e.g. having permitted values in the range 1, ..., Tmax, wherein Tmax is the largest allowed time period. For instance, Tmax = 128 for a wide range of permitted time periods and Tmax = 16, Tmax = 10, Tmax = 8, Tmax = 4, or Tmax = 2 for a narrower range of permitted time periods or even binary-valued time periods. This is beneficial for digitally implemented MMVs in which the programmable time period is restricted to a limited range of time periods, e.g. integer multiples of a fundamental unit time period.

As an example of how the initially continuously distributed network connection strengths and MMV time periods can be gradually transformed into discrete variables, consider the following homotopies with deformation parameter $\gamma$:

$$
C_{net/in}^{EXC/INH}(i,j) \mapsto
\begin{cases}
(1-\gamma) \cdot C_{net/in}^{EXC/INH}(i,j), & if -\frac{1}{2} \le C_{net/in}^{EXC/INH} \le \frac{1}{2} \\[2mm]
(1-\gamma) \cdot C_{net/in}^{EXC/INH}(i,j) + \gamma, & if C_{net/in}^{EXC/INH} > \frac{1}{2} \\[2mm]
(1-\gamma) \cdot C_{net/in}^{EXC/INH}(i,j) - \gamma, & if C_{net/in}^{EXC/INH} < -\frac{1}{2}
\end{cases}
$$

$$
T_i \mapsto (1-\gamma) \cdot T_i + \gamma \cdot max\{1, \lceil T_i \rceil\}
$$

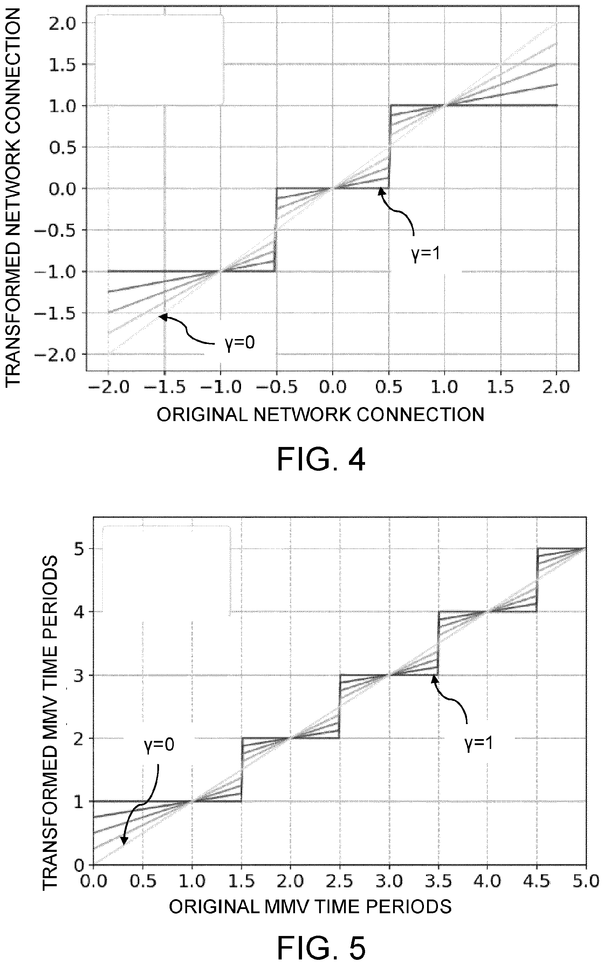

As the number of training epoch increases from the lower interval bound 'E_MIN' to the upper interval bound 'E_MAX', the deformation parameter varies from zero to one. At the interval ends, the following identifications hold: $\gamma$ = 0 when EPOCH = E_MIN and $\gamma$ = 1 when EPOCH = E_MAX. Within the interval [E_MIN, E_MAX], the deformation parameter may vary linearly with the number of training epochs, e.g. as $\gamma$ = (EPOCH-E_MIN)/(E_MAX-E_MIN). Instead of verifying whether the number of training epochs is larger than the lower bound 'E_MIN' and/or lies within the interval [E_MIN, E_MAX], the deformation parameter can be defined over the whole range of training epochs, e.g. by setting $\gamma$ = 0 if EPOCH < E_MIN and $\gamma$ = 1 if EPOCH > E_MAX. In the former case, the transformation reduced to the identity map; in the latter case, a piece-wise constant function is obtained which maps the network connections and MMV time periods to discrete values. FIG. 4 illustrates how the functional relationship between original network connection and transformed network connection evolves if the deformation parameter increases. The same is shown in FIG. 5 with respect to the MMV time periods, assuming five permitted discretization levels. It is noted that the transformation step 304-1 only affects the values of the network connections and MMV time periods during the forward pass 304; the full-precision values (i.e. the untransformed, original values) of the network connections and MMV time periods are used during the backward pass 305. It is further noted that in other embodiments of the invention only the network connections, e.g. the entries in matrices 'C$_{net}$' and 'C$_{in}$', are gradually discretized, but not the MMV time periods. This may lead to a performance gain in analog hardware implementations in which the time periods can be adjusted with high precision.

The forward pass 304 is then followed by a backward pass 305 during which an error signal is propagated through the entire network in reverse order - from the readout layer to the input layer. The error signal is generally determined by a loss function that is linked to the specific task and the network architecture. Frequently encountered loss functions are the mean-square error loss, the L1-loss and the cross-entropy loss. It quantifies how well the readout signals from the network approximate the training targets. A backpropagation algorithm is used to compute the backpropagated error signal in the different layers. Usually, the backward pass 305 combines the step of executing the backpropagation algorithm and optimizing the trainable network parameters. Optimization frameworks such as Adams optimizer, gradient descent or stochastic gradient descent can be used and are known in the art. They coordinate the search through the vast space of possible training parameters, for instance through the computation of gradients of the backpropagated error signal with respect to training parameters. The training parameters, e.g. the network connections in 'C$_{net}$' and 'C$_{in}$' and the MMV time periods, are then updated according to the computed gradients, thus obtaining updates versions of the training parameters in step 305-2.

If the spiking neural network (SNN) has a feed-forward architecture, e.g. SNN with a single hidden layer network or multiple hidden layers such as a deep network, then the backpropagation through time algorithm operates layer-wise, e.g. associating each layer of the network's layer stack with a different time step. For recurrent SNNs, the backpropagation algorithm is unfolding the recurrent network layers through time. The unfolding operation effectively generates multiple instances of the recurrent layer(s) at different moments in time, which all share the same network parameters.

Spiking neural networks, though very promising in view of their energy efficiency, are notoriously difficult to train, especially with a backpropagation algorithm that requires the artificial neurons to have continuously differentiable activation functions. Yet, the hard thresholding behavior of spiking neurons that determines the moment in time the neuron is firing produces discontinuous and non-differentiable output spike. This leads to the problem of vanishing gradients (e.g. when no output spike is generated) and exploding gradients (e.g. the sudden jump in the output signal when the output spike is generated), which hamper the development of efficient training algorithms for spiking neural networks.

One solution to harness the vanishing and exploding gradients is to use surrogate gradient functions in the backward pass, e.g. a substitute of the hard threshold activation function that is differentiable and preserves the context under which the hard threshold activation function has been evaluated. With regard to the update function for the MMVs this implies that, during the backward pass, the hard threshold function FW_ACT, which decides on the output spike creation after the time period T has elapsed, is replaced by a smoothened version whose derivative is well-behaved and sensitive to the timing of the output spike creation. In the forward pass, however, the non-differentiable activation function, i.e. hard thresholding operation, is still used. This causes the creation of discrete spike events, which is the intended way of operating the spiking neural network. An argument of the activation function is saved as context information during the forward pass so that the derivative of the differentiable substitute of the activation function can be determined correctly during the backward pass. However, a mere replacement of the neuron's binary spiking nonlinearity would disregard the fact that also the excitatory events, i.e. switching the MVV from the idle state to the triggered state, and the inhibitory events, i.e. resetting the MMV in the triggered state back to the idle state, are abrupt discontinuous events which cannot be differentiated in an error backpropagation framework. The inventor recognized that the discontinuities relating to the excitatory and inhibitory events have an impact on the learning behavior of the spiking neural network and therefore should be dealt with in the same way as the MVVs spiking nonlinearity. Consequently, a surrogate gradient is also used in the backward passes in respect of the hard threshold functions FW_ACT that define the occurrences of excitatory and inhibitory events (e.g. 'exc' and 'inh' in the pseudo-code) in the MVV update function.

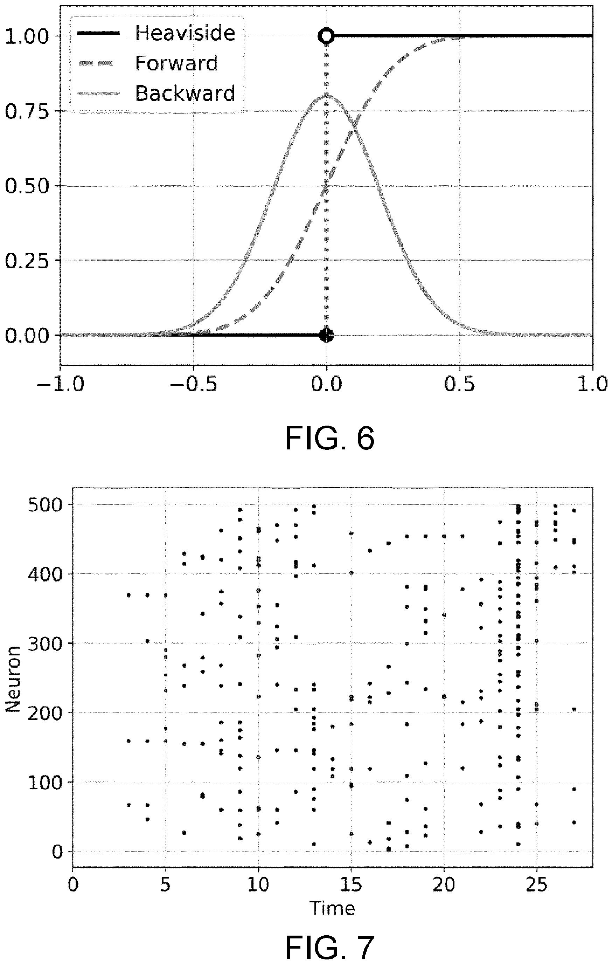

FIG. 6 illustrates a smoothened version of the unit step function as neuron activation function, and the derivative thereof. As can be seen, the derivative is continuous everywhere and its value reflects how close or distant the time counting variable has been relative to the threshold value for output spike generation. In this example, the derivative is a Gaussian distribution with zero mean and the smoothened version of the unit step function corresponds to the cumulative distribution function (CDF) of the Gaussian distribution. The spread of the Gaussian distribution is treated as a hyperparameter. Surrogate gradients are not limited to Gaussian function and may display different shapes, for instance a triangular shape.

The recourse to surrogate gradients has the further advantage that auto-differentiation software tools and machine learning software are now capable of correctly tracing the functional dependencies through the network layers and accurately computing the backpropagated error signals and the training parameter updates. This enables the efficient training of even very large networks of spiking neurons.

In alternative embodiments of the invention, a smoothened version of the steady-state firing rate associated with rate-driven MVVs is used instead of a surrogate gradient. In rate-driven spiking neural networks, the input information is encoded in the spike rate, which requires averaging over a large number of spikes. The averaging effect leads to a quasi-continuous relationship between firing rate of an MVV and its mean input current or voltage, which is again differentiable.

According to some embodiments of the invention, the MMV time periods are fixed also in the backward pass, while the training method is still continuing. Preferably, the MMV time periods are fixed to their discrete counterparts, which are the outcome of the transformation step 304-1. This allows the other network parameters, e.g. the network connections in 'C$_{net}$' and 'C$_{in}$', to adjust to this new constraint during the backward pass. The spiking neural network is fine-tuned during the training epochs which follow the fixing of the MMV time periods, with some gain in the overall network performance.

It is worth dwelling on the gradient calculation for the time growth variable 'state' of the MMV's update function at this point. As mentioned before, the process of increment this time growth or timing variable is multiplicative time integration process, rather than an additive time integration process. It is recalled that in order to have a time integration process, the multiplicative increment 'a' has to be greater than unity. In the multiplicative time integration process, the derivative of the time growth variable 'state' with respect to the excitatory event variable 'exc' at the time the MMV time period 'T' has elapsed is then given by:

$$\frac{\partial state(T)}{\partial exc} = \frac{\partial (a^T \cdot exc \cdot a0)}{\partial exc} = a^T a^{-T+1/2} = a^{1/2} > 1$$

This is the derivative as it enters the chain rule in the error backpropagation context. Clearly, the derivative is insensitive to the MMV time period. In contrast thereto, an additive time integration process would update the time growth or timing variable as state[t+1] = state[t]+1/T, unless state[t] = 0, in which case one has state[t+1] = exc*δ. Here, 'δ' is some small quantity, smaller than the additive increment 1/T but larger than zero, which initiates the additive time integration process. The derivative of the time growth variable 'state' with respect to the excitatory event variable 'exc' at the time the MMV time period 'T' has elapsed is now given by:

$$\frac{\partial state(T)}{\partial exc} = \frac{\partial(1 + exc \cdot \delta)}{\partial exc} = \delta < \frac{1}{T}$$

This time, the derivative is dependent on the MMV time period 'T' and biases the spiking neural network towards shorter time periods during the learning process. Indeed, the shorter the time period the larger the resulting gradients and network parameter updates, whereby network parameters linked to short-period MMVs are learnt faster. Therefore, it is an advantage of embodiments which use a multiplicative time integration process that an unintended training bias towards shorter MMV time periods is avoided.

Embodiments of the invention may comprise the additional step of writing the learnt training parameters to a data storage. A hardware implementation of the MMV-based spiking neural network, e.g. a digital hardware implementation as depicted in FIG. 2, may be designed or configured based on the learnt training parameters, e.g. based on the optimized network parameters obtained through training methods in accordance with embodiments of the invention. Hence, embodiments of the invention may include the step of implementing or configuring the input layer connections, the intra-network connections, and the MMV time periods in spiking neural network in accordance with the optimized network parameters. The so-configured computing hardware may be further improved in-situ, e.g. through a reinforcement learning action, which is one way of addressing imperfections that govern a real-world implementation of the MMV-based spiking neural network, but are not take into account in the network model.

EXAMPLE

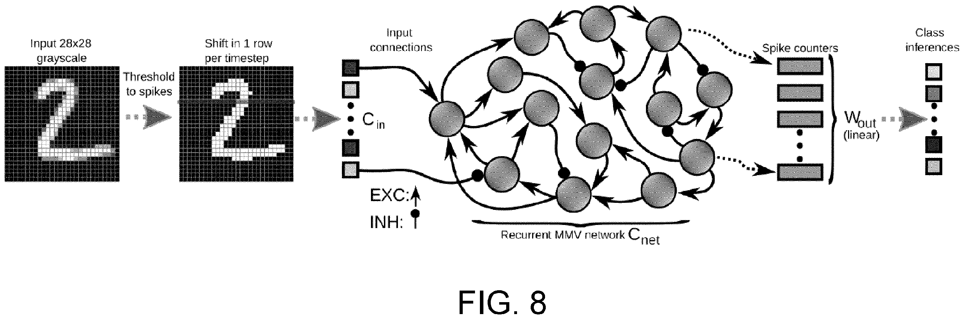

In the following the potential versatility of MMV-based spiking neural networks is demonstrated with regard to the MNIST handwritten digit classification task. FIG. 8 illustrates the network architecture and data input scheme for this example. A recurrent spiking neural network (RSNN) consisting of 500 MVVs and a fully trainable input layer and linear readout layer (size 500x10) had been trained on 50000 training images (in batches of 500) over 200 epochs. The readout layer used the number of spikes detected at the output connector of each MMV, e.g. via the use of a corresponding set of 500 spiker counters.

Training samples and test samples contained grayscale images counting 28 pixels by 28 pixels. The pixel values were first normalized to be distributed in the range from zero (black) to one (white) and subsequently compared to a threshold value of 0.5 to obtain input spike events. Data-augmentation had been carried out by randomly rotating ($\pm 15°$), shifting ($\pm 2$ pixels) and scaling ($\pm 5\%$) the training images. A sequence of 28 input spike vectors was then constructed from the sequence of 28 pixel rows of the image. The input spike vectors were sequentially applied to the units of the input layer, one input spike vector per simulation time step.

The connectivity matrix of the RSNN had been initialized in such a way that each MMV had five feedback connections on average. There were a total of 28 input units, corresponding to the 28 pixels contained in each pixel row of the training images. An average degree of connectivity between the each MMV and the input units had been set to three excitatory and three inhibitory input connections with respective connection strength greater than 0.5. The MMV time periods were drawn randomly from the range T = 2 ... 8.

The MMVs had been reset to the idle state and the spike counters cleared between any two training samples. Intra-network connections and input layer-to-RSNN connections had been gradually transformed into fully binarized connections in the training epoch interval [80, 160]. Starting from epoch number 170, the MMV time periods had been fixed to their discretized values and the learning rate gradually decreased from $5*10^{-3}$ to about $5*10^{-4}$.

Approximately 28.4% of all intra-network connections were active and excitatory recurrent feedback paths were present after training. A typical spike pattern is shown in FIG. 7, which is generated by the RSNN when a single handwritten digit image is applied to the input layer. A single digit of the test set generates on average $285 \pm 27$ spikes. The highest output value of the linear readout layer was used as a class selection criterion, i.e. predicting one of the ten digit classes 0-9. A computational cost of N × C multiply-accumulate (MAC) operations and C additions is incurred by the linear readout layer, wherein N is the number of neurons and C the number of output classes. In a variant, the linear readout layer is replaced by a population coding readout in which the N monostable multivibrators are divided into C equally-sized groups/populations. Spike counts are accumulated in respect of each group of MMVs and the group with the most spike counts determines the predicted class label. Population coding as readout mechanisms is less accurate compared to the linear readout layer but computationally less demanding; it requires only N integer additions.

Table I below compares the average energy cost per inference predicted from simulations of a fully trained recurrent spiking neural network based on MMVs with previously reported chip measurements of the average energy cost per inference for the MNIST handwritten digit recognition task. The achieved test accuracies are listed too. Having regard to the simulated figures for the energy cost and time per inference, a mapping of the MMV network dynamics - excluding the readout mechanism -to TSMC's 28nm HPC+ process, clocked at 100MHz, was assumed. Insofar as only the spiking neural network is concerned, an average energy cost as low as 855pJ/inference is predicted, which outperforms state-of-the-art neuromorphic hardware by far. Even if the energy cost for the linear readout layer is included, embodiments of the invention have the potential to outperform contemporary neuromorphic hardware by a factor one hundred in terms of energy cost per inference at comparable or even improved inference latency and test accuracy.

The following references are cited in Table I:

- (Ref-A) Frenkel, et al. "A 28nm convolutional neuromorphic processor enabling online learning with spike-based retinas", in 2020 IEEE International Symposium on Circuits and Systems (ISCAS), pp. 1-5

- (Ref-B) J. Park, et al. "A 65nm 236.5nJ/classification neuromorphic processor with 7.5% Energy Overhead On-Chip Learning Using Direct Spike-Only Feedback", in 2019 IEEE International Solid State Circuits Conference (ISSCC), pp. 140-142

- (Ref-C) G. K. Chen, et al. "A 4096-neuron 1M-synapse 3.8pJ/sop spiking neural network with on-chip STDP learning and sparse weights in 10nm finfet cmos", in 2018 IEEE Symposium on VLSI Circuits, pp. 255-256

- (Ref-D) J. Stuijt, et al. "$\mu$Brain: An event-driven and fully synthesizable architecture for spiking neural networks", Frontiers in Neuroscience, vol. 15, 2021

**Table I: Energy cost per inference and test accuracies for the MNIST handwritten digit task according to previously reported artificial neural networks designs in hardware and an MVV-based spiking neural network of an embodiment of the invention.**

| Reference | Architecture | Test accuracy | Time per inference | Energy per inference |
|---|---|---|---|---|
| **Embodiment of the invention** | 500 MMVs & linear readout; 28nm TSMC HPC+ process | 98.61% | 50.43 $\mu$s | 14.9nJ (855 pJ + Ereadout) |
| **Embodiment of the invention** | 500 MMVs + population coding readout, 28nm TSMC HPC+ process | 97.32% | 5.33 $\mu$s | 1.56 nJ (855 pJ + Ereadout) |
| **Ref-A** | SPOON; 28 nm event-driven CNN | 97.5% | 117 $\mu$s | 313 nJ |
| **Ref-B** | 200+200+10 SNN; 28 nm process | 97.83% | 10 $\mu$s | 236.5 nJ |
| **Ref-C** | 4096-neuron, 1M synapse SNN; 10 nm process | 97.9% | - | 1.7 $\mu$J |
| **Ref-D** | "$\mu$Brain", 256+64+16 SNN; 40 nm process | 91.7% | 4.2 ms | 308 nJ |

Embodiments of the invention have also been trained on the IBM's DVS128 Gesture dataset and Google's, respectively achieving 92.91% and 98.32% test accuracies for a spiking neural network size of N = 500 monostable multivibrators with a linear readout layer.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments. In the claims, the word "comprising" does not exclude other elements or steps, and the indefinite article "a" or "an" does not exclude a plurality. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method of training a spiking neural network (200) using monostable multivibrators (201-1; 201-j; 201-N) as artificial neurons, each monostable multivibrator comprising an excitatory and an inhibitory input respectively connected to an excitatory and an inhibitory input wire (EXC, INH), the method comprising the steps of:

   (i) running an error backpropagation training algorithm to train the spiking neural network on a training dataset, said error backpropagation training algorithm comprising a forward pass (304) and a backward pass (305); wherein running the forward pass comprises:

   (ii) determining an amount of excitatory input applied to each monostable multivibrator by combining input spikes on the respective excitatory input wire, and setting the monostable multivibrators to a triggered state if the corresponding amount of excitatory input exceeds a pre-determined first threshold value,
   (iii) determining an amount of inhibitory input applied to each monostable multivibrator by combining input spikes on the respective inhibitory input wire, and setting monostable multivibrators to an idle state if the corresponding amount of inhibitory input exceeds a pre-determined second threshold value,
   (iv) step-wise incrementing a state variable associated with each monostable multivibrator if the monostable multivibrator is in the triggered state,
   (v) generating an output spike in respect of monostable multivibrators that automatically return from the triggered state back to the idle state as soon as the corresponding state variable exceeds an adjustable time period (T),
   (vi) applying scaled versions of the output spikes to the excitatory and inhibitory input wires of the spiking neural network in accordance with a network connectivity matrix ($C_{net}$), wherein each entry in the network connectivity matrix has a sign and a magnitude, said sign distinguishing between monostable multivibrator output connections to either one of the excitatory input wires or one of the inhibitory input wires, and said magnitude determining the scaling of the output spikes,
   (vii) modulating (304-1) the entries in the network connectivity matrix over a number of training epochs so as to gradually transform the entries into discrete variables;

   wherein running the backward pass comprises:
   (viii) replacing (305-1) vanishing or exploding gradients related to discontinuous output spike generation events in step (v), discontinuous trigger events in step (ii) and discontinuous reset events in step (iii) by respective surrogate gradients or smoothened steady-state event rates.

2. The method of claim 1, wherein the spiking neural network is an event-driven recurrent spiking neural network and training samples of the training dataset being represented by event-encoded spike trains.

3. The method of any of the preceding claims, wherein step (vii) comprises gradually transforming the entries into ternary digits, thus obtaining fully binarized excitatory connections and fully binarized inhibitory connections between monostable multivibrators in the spiking neural network.

4. The method of any of the preceding claims, wherein step (vii) further comprises modulating the time periods over a number of training epochs so as to gradually transform the time periods into a number of integer-valued time periods.

5. The method of any of the preceding claims, wherein running the forward pass further comprises:

   (ix) applying scaled versions of external input spikes to the excitatory and inhibitory input wires of the spiking neural network in accordance with an input weighting matrix ($C_{in}$), wherein each entry in the input weighting matrix has a sign and a magnitude, said sign distinguishing between external input connections to either one of the excitatory input wires or one of the inhibitory input wires, and said magnitude determining the scaling of the external input spikes,
   (x) modulating the entries in the input weighting matrix over a number of training epochs so as to gradually transform the entries into ternary digits.

6. The method of any of the preceding claims, wherein step (vii) is performed only after a preset number of initial training epochs.

7. The method of any of the preceding claims, wherein step (iv) includes step-wise incrementing a state variable associated with each monostable multivibrator by multiplication with a growth factor.

8. The method of claim 7, wherein the state variable associated with each monostable multivibrator is set to an initial value between a lower bound and an upper bound when the monostable multivibrator transitions from the idle state to the triggered state, said lower bound being defined as the growth factor to the negative power of the time period and said upper bound being defined as the product of the growth factor and the lower bound.

9. The method of any of the preceding claims, wherein the pre-determined first threshold value and the pre-determined second threshold value are equal.

10. The method of any of the preceding claims, wherein the monostable multivibrators are implemented as digital logic gates and running the forward pass comprises executing a simulation model (304-3) of the digital logic gates.

11. The method of any of the preceding claims, wherein the monostable multivibrators are non-retriggerable, and/or wherein the state variable associated with each monostable multivibrator in the idle state is zero.

12. The method of any of the preceding claims, further comprising the step of applying output spikes generated by one or more of the monostable multivibrators of the spiking neural network to a linear readout layer, or counting the output spikes generated by different groups of monostable multivibrators of the spiking neural network.

13. A computer program product comprising instructions which, when executed by a computer, cause the computer to carry out the method of any one of the preceding claims.

14. A computer-readable data carrier having stored thereon the computer program product of claim 13.

15. A configuration method for a hardware system comprising a spiking neural network formed by a plurality of digitally implemented monostable multivibrators, each monostable multivibrator comprising an output connector, an excitatory input connector coupled to a corresponding excitatory signal wire and an inhibitory input connector coupled to a corresponding inhibitory signal wire, and further comprising programmable binary connections between the output connector of each monostable multivibrator and one or more of the excitatory signal wires and between the output connector of each monostable multivibrator and one or more of the inhibitory signal wires, the method comprising:

obtaining a set of optimized excitatory network connections, a set of optimized inhibitory network connections and optimized time periods for the plurality of monostable multivibrators, by carrying out the method of claim 1, wherein step (vii) of claim 1 further comprises gradually transforming the entries into ternary digits, thus obtaining fully binarized excitatory connections and fully binarized inhibitory connections between monostable multivibrators in the spiking neural network, and modulating the time periods over a number of training epochs so as to gradually transform the time periods into a number of integer-valued time periods;
programming the time periods associated with the monostable multivibrators according to the optimized time periods;
programming the binary connections between the monostable multivibrator output connectors and the excitatory signal wires according to the optimized excitatory network connections;
programming the binary connections between the monostable multivibrator output connectors and the inhibitory signal wires according to the optimized inhibitory network connections.

FIG. 1

FIG. 2

START

**PROVIDE & INITIALIZE NETWORK MODEL**

301

**PROVIDE TRAINING DATA SET**

302

**APPLY TRAINING SAMPLE & EXECUTE FORWARD PASS**

304

$E\_MIN < EPOCH$   NO

YES

**TRANSFORM NETWORK CONNECTION STRENGTH & MMV TIME PERIODS TOWARDS DISCRETE SETS**

304-1

**SPLIT CONNECTIVITY MATRIX & CALCULATE ACTIVATIONS**

304-2

**SIMULATE NETWORK MODEL**

304-3

**CALCULATE ERROR SIGNAL & EXECUTE BACKWARD PASS**

305

**REPLACE GRADIENTS BY SURROGATES**

305-1

**UPDATE NETWORK CONNECTION STREGTHS & MMV TIME PERIODS**

305-2

NEXT EPOCH ?   YES

NO

END

FIG. 3

FIG. 4

FIG. 5

FIG. 6

FIG. 7

FIG. 8

EP 4 386 629 A1

Europäisches
Patentamt
European
Patent Office
Office européen
des brevets

# EUROPEAN SEARCH REPORT

Application Number

EP 22 21 3914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C. Frenkel: "Monostable multivibrator networks for low-cost spike-based computing", MSc thesis project proposals, 9 November 2022 (2022-11-09), XP093045109, Retrieved from the Internet: URL:https://elca.tudelft.nl/Education/thesisdetails.php?ti=542 [retrieved on 2023-05-08] * paragraphs 2 and 3; references * | 1-15 | INV. G06N3/049 G06N3/063 G06N3/0495 G06N3/084 G06N3/044 |
| X,D | L. KEUNINCKX ET AL: "Monostable multivibrators as novel artificial neurons", NEURAL NETWORKS, vol. 108, 23 August 2018 (2018-08-23), pages 224-239, XP093045107, DOI: 10.1016/j.neunet.2018.08.014 * sections 1-5 * | 1-15 | |
| X | -& L. Keuninckx et al: "Monostable multivibrators as novel artificial neurons (Supplementary material)", Neural Networks, 23 August 2018 (2018-08-23), XP093045113, DOI: 10.1016/j.neunet.2018.08.014 Retrieved from the Internet: URL:https://ars.els-cdn.com/content/image/1-s2.0-S0893608018302405-mmc2.pdf [retrieved on 2023-05-09] * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 11 May 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

Europäisches
Patentamt

European
Patent Office

Office européen
des brevets

# EUROPEAN SEARCH REPORT

Application Number

EP 22 21 3914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | E. O. NEFTCI ET AL: "Surrogate gradient learning in spiking neural networks: bringing the power of gradient-based optimization to spiking neural networks", IEEE SIGNAL PROCESSING MAGAZINE, vol. 36, no. 6, 5 November 2019 (2019-11-05), pages 51-63, XP011754849, DOI: 10.1109/MSP.2019.2931595 * the whole document * | 1-15 | |
| A | D. KIM ET AL: "eWB: event-based weight binarization algorithm for spiking neural networks", IEEE ACCESS, vol. 9, 26 February 2021 (2021-02-26), pages 38097-38106, XP011841531, DOI: 10.1109/ACCESS.2021.3062405 * the whole document * | 1-15 | |
| A | M. WU ET AL: "GAND-Nets: training deep spiking neural networks with ternary weights", PROCEEDINGS OF THE 35TH INTERNATIONAL SYSTEM-ON-CHIP CONFERENCE (SOCC'22), 5 September 2022 (2022-09-05), XP034204977, DOI: 10.1109/SOCC56010.2022.9908132 * the whole document * | 1-15 | **TECHNICAL FIELDS SEARCHED (IPC)** |

The present search report has been drawn up for all claims

| Place of search | Date of completion of the search | Examiner |
|---|---|---|
| The Hague | 11 May 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. KEUNINCKX et al.** Monostable multivibrators as novel artificial neurons. *Neural Networks,* 2018, vol. 108, 224-239
- **FRENKEL et al.** A 28nm convolutional neuromorphic processor enabling online learning with spike-based retinas. *2020 IEEE International Symposium on Circuits and Systems (ISCAS),* 1-5
- **J. PARK et al.** A 65nm 236.5nJ/classification neuromorphic processor with 7.5% Energy Overhead On-Chip Learning Using Direct Spike-Only Feedback. *2019 IEEE International Solid State Circuits Conference (ISSCC),* 140-142

- **G. K. CHEN et al.** A 4096-neuron 1M-synapse 3.8pJ/sop spiking neural network with on-chip STDP learning and sparse weights in 10nm finfet cmos. *2018 IEEE Symposium on VLSI Circuits,* 255-256
- **J. STUIJT et al.** μBrain: An event-driven and fully synthesizable architecture for spiking neural networks. *Frontiers in Neuroscience,* 2021, vol. 15